# EUROPÄISCHE PATENTSCHRIFT

(11) **EP 0 489 331 B1**
(45) Veröffentlichungstag und Bekanntmachung des Hinweises auf die Patenterteilung: **10.05.1995**
(21) Anmeldenummer: 91120095.4
(22) Anmeldetag: 26.11.1991
(51) Int. Cl.: F16K 31/40

(54) **Eigenmediumbetätigtes, durch einen Magnetanker gesteuertes Servoventil**
Controlled servovalve, operated by its own fluid
Soupape actionnée par son propre fluide et commandée par un électro-aimant

(30) Priorität: 05.12.1990 DE 4038736
(43) Veröffentlichungstag der Anmeldung: 10.06.1992
(73) Patentinhaber: A. und K. Müller GmbH & Co. KG, D-40593 Düsseldorf (DE)
(72) Erfinder: Moldenhauer, Hermann, W-4000 Düsseldorf 12 (DE)
(74) Vertreter: Feder, Wolf-Dietrich, Dr. Dipl.-Phys.

(56) Entgegenhaltungen:
- DE-A- 2 439 271
- FR-A- 1 280 661
- FR-A- 1 517 425

## Beschreibung

Die Erfindung betrifft ein eigenmediumbetätigtes, durch einen Magnetanker gesteuertes Servoventil mit den Merkmalen aus dem Oberbegriff des Patentanspruchs 1.

Derartige Servoventile sind an sich bekannt und beispielsweise in der FR-A- 1 517 425 und FR-A- 1 280 661 beschrieben.

Bei diesen bekannten Servoventilen sind die Distanzhalter an den Seiten des Magnetankers entlanggeführt und stutzen sich direkt auf dem Differentialkolben ab. Aufgrund ihrer Konstruktion öffnen die Ventile bei Erregung der Magnetspule.

Es sind auch Servoventile bekannt, bei denen das den Magnetanker aufweisende Magnetsystem räumlich getrennt vom Steuerraum des Ventils am Ventilgehäuse angeordnet ist, wobei die vom Magnetanker zu verschließende Entlastungsbohrung dem Auslaß des Ventils zugeordnet ist. Ein derartiges Ventil ist beispielsweise in der DE-A-38 22 830 beschrieben. Bei derartigen Ventilen muß der Magnetanker nur den Hub ausführen, der zur Öffnung der Entlastungsbohrung erforderlich ist. Dadurch halten sich die Anforderungen an die notwendige elektrische Leistung für das Magnetsystem in Grenzen, die Ventile lassen sich aber sehr viel weniger einfach und kompakt aufbauen.

Der Erfindung liegt die Aufgabe zugrunde, ein Servoventil mit den Merkmalen aus dem Oberbegriff des Patentanspruchs 1 zu schaffen, das bei allen Vorteilen, welche die Bauart mit koaxial zum Differentialkolben angeordnetem Magnetanker bietet, so ausgebildet ist, daß es im erregten Zustand der Magnetspule schließt.

Die Lösung dieser Aufgabe erfolgt erfindungsgemäß mit den Merkmalen aus dem kennzeichnenden Teil des Patentanspruchs 1. Vorteilhafte Ausführungsformen des erfindungsgemäßen Servoventils sind in den Unteransprüchen beschrieben.

Der Grundgedanke der Erfindung besteht darin, ein Ventil, das im erregten Zustand der Magnetspule schließt, in der Weise zu verwirklichen, daß das Kopfstück sich über einen Distanzhalter nicht auf dem Differentialkolben, sondern auf der in besonderer Weise ausgestalteten Magnetankerdichtung abstützt, die beispielsweise über eine elastische Membran mit der dem Differentialkolben zugewandten Seite des Magnetankers verbunden ist. Beim Schließen dieses Ventils werden Magnetanker und Kopfstück aufeinander zu bewegt und dadurch über den Distanzhalter die Magnetankerdichtung auf die Entlastungsbohrung gedrückt. Beim Öffnen des Ventils hebt sich unter der Einwirkung der elastischen Membran die Magnetankerdichtung von der Entlastungsbohrung ab und verschiebt über den Distanzhalter das Kopfstück.

Durch Anordnung einer Rückstellfeder zwischen dem Kopfstück und einen mit dem Gehäuse fest verbundenen Anschlag kann dafür gesorgt werden, daß die Funktion beider prinzipieller Ausführungsformen des Servoventils lageunabhängig ist.

Im Folgenden wird anhand der beigefügten Zeichnungen ein Ausführungsbeispiel für ein Servoventil nach der Erfindung näher erläutert.

In den Zeichnungen zeigen:
- Fig. 1: einen Längsschnitt durch ein bei erregter Magnetspule schließendes Servoventil im geöffneten Zustand;
- Fig. 2: einen Längsschnitt durch das Servoventil analog Fig. 1 im geschlossenen Zustand;
- Fig. 3: eine Aufsicht auf den Differentialkolben des Servoventils nach Fig. 1 und 2;
- Fig. 4: einen vergrößerten Teilschnitt durch den Bereich der Magnetankerdichtung bei dem Servoventil nach Fig. 1 bis 3.

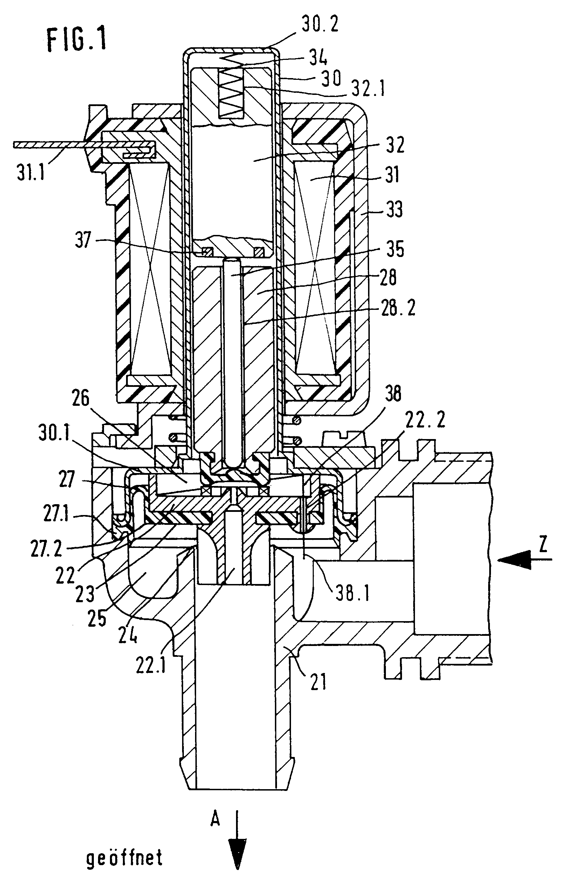

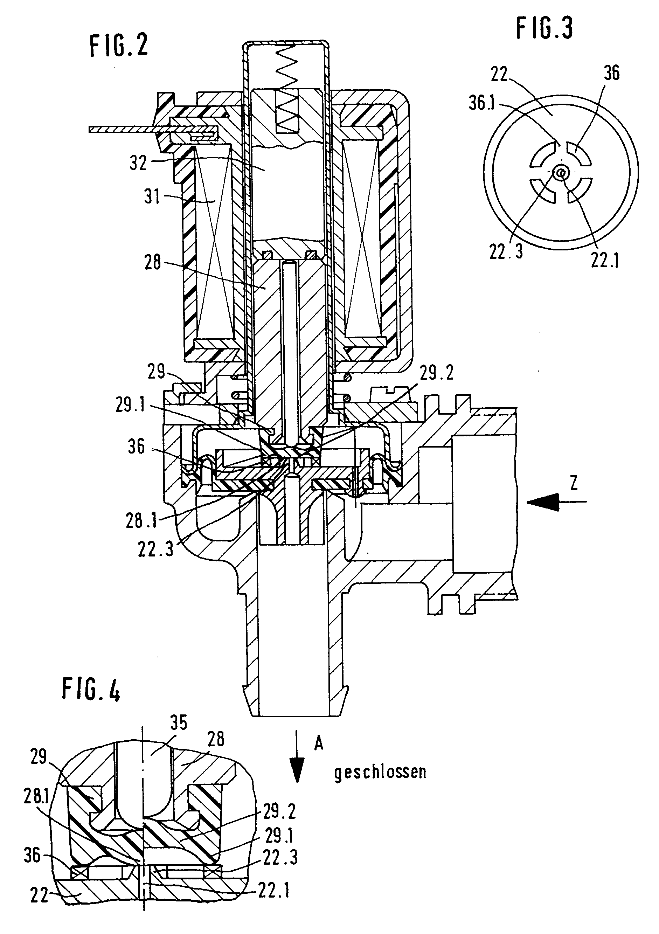

Das in den Fig. 1 und 2 dargestellte Servoventil besitzt ein Ventilgehäuse 21 mit einem Einlaß Z und einem Auslaß A. Im Ventilgehäuse 21 ist ein Differentialkolben 22 bewegbar angeordnet, der einen Ventilteller 23 trägt, der in eine Rollmembran 27 integriert ist, deren äußerer Rand 27.1 mit dem Ventilgehäuse 21 verbunden ist, während ihr innerer Rand 27.2 mit dem Ventilteller 23 verbunden ist. Die Rollmembran 27 trennt den Druckraum 25, der mit dem Ventileinlaß Z verbunden ist, von dem Steuerraum 26, der über die Entlastungsbohrung 22.1 mit dem Ventilauslaß A und über die Steuerbohrung 22.2 mit dem Druckraum 25 verbunden ist. Der Druckraum 25 ist über den Ventilsitz 24 bei geöffnetem Ventil mit dem Auslaß A verbunden.

Bei dieser Ausführungsform enthält der Steuerraum 26 ein Federelement 38, das einen durch die Steuerbohrung 22.2 hindurchgeführten geraden Abschnitt 38.1 aufweist.

An der in Fig. 1 und 2 oberen Seite des Ventilgehäuses 21 ist ein Magnetsystem zur Steuerung des Ventils angeordnet mit einer Magnetspule 31, welche elektrische Anschlüsse 31.1 aufweist und in der ein Führungsrohr 30 angeordnet ist, dessen erweitertes Ende 30.1 den Steuerraum 26 oben und an den Seiten begrenzt. An seiner Oberseite besitzt das Führungsrohr 30 ein feste Abschlußwand 30.2. Im Führungsrohr 30 sind sowohl der Magnetanker 28 als auch das Kopfstück 32 axial verschiebbar angeordnet. Das Kopfstück 32 besitzt an der vom Magnetanker 28 abgewandten Seite eine axiale Bohrung 32.1, in der eine als Rückstellfeder wirkende Schraubenfeder 34 angeordnet ist, die sich mit ihrem äußeren Ende an der Abschlußwand 30.2 abstützt. An der dem Magnetanker 28 zugewandten Seite stützt sich das Kopfstück 32 über einen stabförmigen Distanzhalter 35, der durch eine Längsmittelbohrung 28.2 des Magnetankers 28 geführt ist, auf der Magnetankerdichtung 28.1 ab. Wie den Fig. 2 und 4 zu entnehmen, ist die Magnetankerdichtung 28.1 in eine elastische Membran 29.2 integriert, die im Inneren eines rohrförmigen Halteelements 29 angeordnet ist. Das Halteelement 29 ist mit seinem dem Magnetanker 28 zugewandten Ende an diesem befestigt, während das andere Ende 29.1 einem Abstützkragen 36 gegenüberliegt, der koaxial zur Entlastungsbohrung 22.1 auf der Oberfläche des Differentialkolbens 22 angeordnet ist. Der Abstützkragen 36 besitzt, wie aus Fig. 3 zu entnehmen, vier radiale Öffnungen 36.1, damit das Medium aus- und eintreten kann und in der Mitte des Abstützkragens 36 ist die Öffnung der Entlastungsbohrung 22.1 an der Spitze eines kegelförmigen Ansatzes 22.3 angeordnet. Die Höhe des Ansatzes 22.3 entspricht im wesentlichen der Höhe des Abstützkragens 36. Das Halteelement 29 mit der Membran 29.2 und der Magnetankerdichtung 28.1 besteht aus einem Material, das möglichst gute Rückstelleigenschaften besitzt, beispielsweise aus einem Siliconwerkstoff. Die Anordnung der Membran 29.2 innerhalb des Halteelements 29 ist in einem solchen Abstand vom unteren Ende 29.1 gewählt und die Elastizität der Membran 29.2 derart festgelegt, daß bei am Kopfstück 32 anliegenden Magnetanker 28 die Magnetankerdichtung 28.1 an der Unterseite des Halteelements 29 herausgedrückt wird und sich auf die Öffnung der Entlastungsbohrung 22.1 aufsetzen kann. Die Länge des Distanzhalters 35 ist so bemessen, daß im entregten Zustand der Magnetspule 31 der Abstand zwischen den einander zugewandten Oberflächen des Magnetankers 28 und des Kopfstücks 32 mindestens den zum Schließen der Entlastungsbohrung 22.1 notwendigen Weg der Magnetankerdichtung 28.1 entspricht.

In der dem Magnetanker 28 zugewandten Fläche des Kopfstücks 32 kann ein Kurzschlußring 37 angeordnet sein. Die Magnetspule 31 ist von Magnetjoch 33 umfaßt.

Die Funktionsweise des in den Fig. 1 bis 4 dargestellten Servoventils ist folgende:

In dem in Fig. 1 dargestellten entregten Zustand der Magnetspule 31 werden Kopfstück 32 und Magnetanker 28 durch die Wirkung der elastischen Membran 29.2 über den Distanzhalter 35 in einem vorgegebenen Abstand gehalten. Der untere Rand 29.1 des Halterungselementes 29 sitzt auf dem Abstützkragen 36 auf und bei entspannter Membran 29.2 und entsprechend angehobener Magnetankerdichtung 28.1 ist die Entlastungsbohrung 22.1 geöffnet und damit das Ventil unter der Einwirkung des Mediumsdruckes in der Offenstellung. Durch entsprechende Ausbildung und Vorspannung der Rollmembran 27 kann dafür gesorgt werden, daß das Servoventil auch bei Mediumsdruck 0 geöffnet ist. Dies kann beispielsweise, wie in der älteren nicht vorveröffentlichten DE-OS 39 29 551 beschrieben, dadurch geschehen, indem die Rollmembran 27 durch Vulkanisation in der der Öffnungsstellung des Ventiltellers entsprechenden Stellung erzeugt wird, so daß sie sich in ihrer entspannten Ruhestellung in einer Lage befindet, die der Öffnung des Ventils entspricht.

Bei Erregung der Magnetspule 31 werden die Rolflächen des Magnetankers 28 und des Kopfstücks 32 zusammengezogen, was zur Folge hat, daß der Distanzhalter 35 die Magnetankerdichtung 28.1 nach unten schiebt, wobei sich die Membran 29.2 nach unten wölbt und vorspannt. Dadurch wird die Magnetankerdichtung auf die Öffnung der Entlastungsbohrung 22.1 aufgedrückt und diese wird abgedichtet. Der untere Rand des Halterungselenentes 29 hebt vom Abstützkragen 36 ab und der Differentialkolben 22 senkt sich unter dem Einfluß des Mediumsdrucks, so daß der Ventilteller 23 auf dem Ventilsitz 24 aufsitzt. Das Servoventil befindet sich im geschlossenen Zustand.

Bei dieser Ausführung des Ventils sind mit minimalen magnetischen Kräften große Ventilhübe überwindbar und die Steuerleistung liegt im Milliwattbereich.

## Patentansprüche

1. Eigenmediumbetätigtes, durch einen Magnetanker gesteuertes Servoventil mit einem in einem Ventilgehäuse (21) bewegbar angeordneten, den Ventilteller (23) tragenden Differentialkolben (22) an dessen einer Seite ein mit dem Ventileinlaß (Z) verbundener Druckraum (25) angeordnet ist, der über einen dem Ventilteller (23) gegenüberliegenden Ventilsitz (24) mit dem Ventilauslaß (A) verbunden ist und an dessen anderer Seite ein Steuerraum (26) angeordnet ist, der über eine mittig im Differentialkolben (22) angeordnete Entlastungsbohrung (22.1) mit dem Ventilauslaß (A) und über eine außermittig im Differentialkolben angeordnete Steuerbohrung (22.2) mit dem Druckraum (25) verbunden ist und bei dem der koaxial zum Differentialkolben (22) angeordnete, in einer Magnetspule (11, 31) geführte Magnetanker (28) an seinem in den Steuerraum (26) hineingeführten einen Ende eine der Entlastungsbohrung gegenüberliegende Magnetankerdichtung (28.1) aufweist, während sein anderes Ende einem koaxial zum Magnetanker und mindestens teilweise in der Magnetspule angeordneten Kopfstück (32) gegenüberliegt, wobei das Kopfstück (32) in axialer Richtung verschiebbar angeordnet ist und sich an seiner, dem Magnetanker (28) zugewandten Seite auf einem Distanzhalter (35) abstützt, der relativ zum Magnetanker verschiebbar derart geführt ist, daß sich sein vom Kopfstück (32) abgewandtes Ende auf einem bewegbaren Bauteil (28.1) des Ventils derart abstützt, daß im entregten Zustand der Magnetspule sich aufgrund einer zwischen Magnetanker (28) und Kopfstück (32) wirksamen Federkraft (29.2) ein vorgegebener Abstand zwischen Magnetanker (28) und Kopfstück (32) einstellt, während im erregten Zustand der Magnetspule (31) Magnetanker (28) und Kopfstück (32) gegen die Wirkung dieser Federkraft aneinander anliegen, dadurch gekennzeichnet, daß für ein im erregten Zustand der Magnetspule (31) schließendes Servoventil der Distanzhalter (35) durch eine Längsmittelbohrung (28.2) des Magnetankers (28) hindurchgeführt ist und sich auf der von der Entlastungsbohrung (22.1) abgewandten Seite der Magnetankerdichtung (28.1) abstützt, die als bewegbares Bauteil über ein federndes Element (29.2) mit dem Magnetanker (28) verbunden ist derart, daß sie bei erregter Magnetspule (31) gegen die Kraftwirkung des federnden Elementes (29.2) aufgrund der Relativbewegung zwischen Magnetanker (28) und Kopfstück (32) vom Distanzhalter (35) auf die Entlastungsbohrung (22.1) aufgedrückt wird, wobei die Länge des Distanzhalters (35) so bemessen ist, daß im entregten Zustand der Magnetspule (31) der Abstand zwischen den einander zugewandten Flächen des Magnetankers (28) und des Kopfstücks (32) mindestens dem zum Schließen der Entlastungsbohrung notwendigen Weg der Magnetankerdichtung (28.1) entspricht.

2. Servoventil nach Anspruch 1, dadurch gekennzeichnet, daß das federnde Element eine Membran (29.2) ist, in welche die Magnetankerdichtung (28.1) integriert ist und deren äußerer Rand mit dem Außenrand der dem Differentialkolben (22) zugewandten Fläche des Magnetankers (28) verbunden ist.

3. Servoventil nach Anspruch 2, dadurch gekennzeichnet, daß die Membran (29.2) innerhalb eines koaxial zum Magnetanker (28) angeordneten rohrförmigen Halteelements (29) angeordnet ist, dessen eines Ende mit dem Magnetanker (28) verbunden ist, während das andere Ende dem Differentialkolben (22) gegenüberliegt, wobei der Abstand zwischen der Membran (29.2) und diesem Ende derart ist, daß im entregten Zustand der Magnetspule (31) sich der Magnetanker (28) über das Halteelement (29) auf dem Differentialkolben (22) abstützt, wobei ein vorgegebener Abstand zwischen Magnetankerdichtung (28.1) und Entlastungsbohrung (22.1) sichergestellt ist.

4. Servoventil nach Anspruch 3, dadurch gekennzeichnet, daß der Differentialkolben (22) in einem dem Ende des Halteelements (29) gegenüberliegenden Bereich einen ringförmigen Abstützkragen (36) aufweist, der mindestens eine radiale Öffnung (36.1) besitzt und in dessen Mitte die Öffnung der Entlastungsbohrung (22.1) an der Spitze eines kegelförmigen Ansatzes (22.3) angeordnet ist, wobei die Höhe des Abstützkragens (36) im wesentlichen der Höhe des kegelförmigen Ansatzes (22.3) entspricht.

5. Servoventil nach Anspruch 3 oder 4, dadurch gekennzeichnet, daß Halterungselement (29), Membran (29.2) und Magnetankerdichtung (28.1) einstückig aus Siliconmaterial bestehen.

6. Servoventil nach einem der Ansprüche 1 bis 5, dadurch gekennzeichnet, daß das Kopfstück (32) sich an der vom Magnetanker (28) abgewandten Seite über eine Rückstellfeder (34) an eine mit dem Gehäuse fest verbundenen Anschlag (30.2) abstützt.

7. Servoventil nach einem der Ansprüche 1 bis 6, dadurch gekennzeichnet, daß Magnetanker (8, 28) und Kopfstück (32) in einem fest mit dem Gehäuse (21) verbundenen, die Magnetspule (31) durchsetzenden dünnwandigen Führungsrohr (36) geführt sind.

8. Servoventil nach Anspruch 7, dadurch gekennzeichnet, daß das Führungsrohr an seiner dem Differentialkolben (22) zugewandten Seite eine den Steuerraum (26) teilweise umfassende Verbreiterung (20.1) aufweist.

9. Servoventil nach einem der Ansprüche 1 bis 8, dadurch gekennzeichnet, daß in der dem Magnetanker (28) gegenüberliegenden Fläche des Kopfstücks (22) ein Kurzschlußring (37) angeordnet ist.

## Claims

1. Servovalve which is operated by its own medium and controlled by a magnet armature, with a differential piston (22), which is disposed in a mobile manner in a valve housing (21) and bears the valve disc (23), on one side of which piston a pressure chamber (25) connected to the valve inlet (Z) is disposed, the pressure chamber being connected to the valve outlet (A) via a valve seat (24) lying opposite the valve disc (23), and on the other side of which piston a control chamber (26) is disposed, the latter being connected to the valve outlet (A) via a relief bore (22.1), which is disposed centrally in the differential piston (22), and to the pressure chamber (25) via a control bore (22.2), which is disposed off-centre in the differential piston, in which valve the magnet armature (28), which is disposed coaxially with the differential piston (22) and is guided in a magnet coil (11, 31), comprises a magnet armature seal (28.1), which lies opposite the relief bore, at its end which is introduced into the control chamber (26), while its other end lies opposite a head piece (32), which is disposed coaxially with the magnet armature and at least partly in the magnet coil, the head piece (32) being disposed so as to be displaceable in the axial direction and being supported at its side which faces the magnet armature (28) on a spacer (35) which can be displaced relative to the magnet armature such that its end which is distant from the head piece (32) is supported on a mobile component (28.1) of the valve so that, on account of a spring force (29.2) which is operative between the magnet armature (28) and the head piece (32), a predetermined distance is set between the magnet armature (28) and the head piece (32) when the magnet coil is in the de-energised state, while the magnet armature (28) and the head piece (32) are in contact with one another against the action of this spring force when the magnet coil (31) is in the energised state, characterised in that, for a servovalve which closes when the magnet coil (31) is in the energised state, the spacer (35) is passed through a longitudinal centre bore (28.2) in the magnet armature (28) and is supported on the side of the magnet armature seal (28.1) which is distant from the relief bore (22.1), which seal is connected as a mobile component to the magnet armature (28) via a resilient element (29.2) such that, on account of the relative movement between the magnet armature (28) and the head piece (32), it is pressed by the spacer (35) onto the relief bore (22.1) against the action of the force of the resilient element (29.2) when the magnet coil (31) is energised, the length of the spacer (35) being determined such that the distance between the facing surfaces of the magnet armature (28) and the head piece (32) when the magnet coil (31) is in the de-energised state corresponds at least to the travel of the magnet armature seal (28.1) which is required to close the relief bore.

2. Servovalve according to claim 1, characterised in that the resilient element is a diaphragm (29.2), into which the magnet armature seal (28.1) is integrated and the outer edge of which is connected to the outer edge of the surface of the magnet armature (28) which faces the differential piston (22).

3. Servovalve according to claim 2, characterised in that the diaphragm (29.2) is disposed inside a tubular holding element (29) which is disposed coaxially with the magnet armature (28) and one end of which is connected to the magnet armature (28), while the other end lies opposite the differential piston (22), the distance between the diaphragm (29.2) and this end being such that the magnet armature (28) is supported on the differential piston (22) via the holding element (29) when the magnet coil (31) is in the de-energised state, and a predetermined distance between the magnet armature seal (28.1) and the relief bore (22.1) being guaranteed.

4. Servovalve according to claim 3, characterised in that the differential piston (22) comprises an annular support collar (36) in a region lying opposite the end of the holding element (29), which collar has at least one radial opening (36.1) and in the centre of which the opening of the relief bore (22.1) is disposed at the apex of a conical projection (22.3), the height of the support collar (36) essentially corresponding to the height of the conical projection (22.3).

5. Servovalve according to claim 3 or 4, characterised in that the holding element (29), the diaphragm (29.2) and the magnet armature seal (28.1) are formed in one piece from silicone material.

6. Servovalve according to one of claims 1 to 5, characterised in that the head piece (32) is supported at a stop (30.2), which is firmly connected to the housing, via a return spring (34) on the side which is distant from the magnet armature (28).

7. Servovalve according to one of claims 1 to 6, characterised in that the magnet armature (8, 28) and the head piece (32) are guided in a thin-walled guide tube (36), which is firmly connected to the housing (21) and extends through the magnet coil (31).

8. Servovalve according to claim 7, characterised in that the guide tube has a widened portion (20.1), which partly embraces the control chamber (26), on its side which faces the differential piston (22).

9. Servovalve according to one of claims 1 to 8, characterised in that a short-circuit ring (37) is disposed in the surface of the head piece (22) which lies opposite the magnet armature (28).

## Revendications

1. Servo-soupape commandée par son propre fluide, piloté par un induit magnétique, laquelle comporte, mobile dans une cage (21) de soupape, un piston différentiel (22) supportant la tête (23) de soupape et sur un côté duquel est disposée une chambre de compression (25) reliée à l'admission (Z) de la soupape, ladite chambre de compression étant reliée par un siège (24) opposé à la tête (23) à l'échappement (A) de la soupape, et sur l'autre côté dudit piston (22) étant disposée une chambre de régulation, laquelle est reliée à l'échappement (A) à travers un alésage de délestage (22.1) disposé centralement dans ledit piston (22) et à la chambre de compression (25) à travers un alésage de régulation (22.2) disposé de manière décentrée dans ledit piston, tandis que sur ladite soupape, l'induit magnétique (28) disposé coaxialement par rapport au piston (22), et passant dans une bobine magnétique (11.31), présente sur son extrémité pénétrant dans la chambre de régulation (26) un joint pour induit magnétique (28.1) placé en face de l'alésage de délestage, l'autre extrémité dudit induit magnétique étant située en face d'une pièce sommitale (32) disposée coaxialement à l'induit magnétique et au moins partiellement à l'intérieur de la bobine magnétique, ladite pièce sommitale (32) étant coulissable en direction axiale et s'appuyant sur son côté orienté vers l'induit (28) sur une pièce d'écartement (35), laquelle peut coulisser par rapport à l'induit magnétique de telle sorte que son extrémité opposée à ladite pièce sommitale (32) s'appuie sur un composant mobile (28.1) de la soupape de telle sorte qu'à l'état désexcité de la bobine, en raison d'une force élastique (29.2) agissant entre l'induit (28) et la pièce sommitale (32), s'établit une distance prédéterminée entre ledit induit magnétique (20) et ladite pièce sommitale (32), alors qu'à l'état excité de ladite bobine (31), l'induit (28) de la pièce sommitale (32) viennent s'appliquer l'un sur l'autre en s'opposant à l'effet de cette force élastique, caractérisée en ce que, pour une servo-soupape se fermant à l'état excité de la bobine (31), la pièce d'écartement (35) passe à travers un alésage longitudinal central (28.2) de l'induit (28) et s'appuie sur le côté du joint (28.1) opposé à l'alésage (22.1), ledit joint étant relié à l'induit (28) à la manière d'un composant mobile par un élément élastique (29.2) de telle sorte que, lorsque la bobine (31) est excitée, ledit joint (28.1) est serré sur l'alésage (22.1) en s'opposant à la force exercée par l'élément élastique (29.2) en raison du mouvement réciproque entre l'induit (28) et la pièce sommitale (32), la longueur de la pièce d'écartement (35) étant dimensionnée de telle sorte qu'à l'état désexcité de la bobine (31) la distance entre les faces mutuellement opposées de l'induit (28) et de la pièce sommitale (32) correspond au moins au trajet du joint (28) nécessaire pour la fermeture de l'alésage de délestage.

2. Servo-soupape selon la revendication 1, caractérisée en ce que l'élément élastique est une membrane (29.2) dans laquelle est intégré le joint (28.1) de l'induit magnétique et dont le bord extérieur est relié au bord extérieur de la face de l'induit (28) orientée vers le piston différentiel (22).

3. Servo-soupape selon la revendication 2, caractérisée en ce que la membrane (29.2) est disposée à l'intérieur d'un élément support (29) de forme tubulaire disposé coaxialement par rapport à l'induit magnétique (28) et dont une extrémité est reliée à cet induit magnétique (28) tandis que son autre extrémité fait face au piston différentiel (22), la distance entre la membrane (29.2) et cette extrémité étant telle, qu'à l'état désexcité de la bobine (31), l'induit (28) s'appuie, à travers l'élément support (29), sur ledit piston différentiel, ce qui a pour effet d'assurer la présence d'une distance prédéterminée entre le joint (28.1) et l'alésage (22.1).

4. Servo-soupape selon la revendication 3, caractérisée en ce que le piston différentiel (22) présente, dans une zone opposée à l'extrémité de l'élément support (29), un collier de renfort de forme annulaire (36) lequel est muni d'au moins un trou radial (36.1) et au centre duquel est disposé le trou de l'alésage (22.1) sur la point d'un embout cunéiforme (22.3), la hauteur du collier (36) correspondant sensiblement à la hauteur de cet embout cunéiforme (22.3).

5. Servo-soupape selon la revendication 3 ou 4, caractérisée en ce que l'élément du support (29), la membrane (29.2) et le joint (28.1) de l'induit sont constitués en une seule pièce en un matériau à base de silicone.

6. Servo-soupape selon l'une des revendications 1 à 5, caractérisée en ce que, sur son côté opposé à l'induit magnétique (28), la pièce sommitale (32) s'appuie, à travers un ressort de rappel (34), sur une butée (30.2) reliée de manière fixe à la cage.

7. Servo-soupape selon l'une des revendications 1 à 6, caractérisée en ce que l'induit (8.28) et la pièce sommitale (32) passent à l'intérieur d'un tube de guidage (36) à paroi fine, traversant la bobine (31) et relié de manière fixe à la cage (21).

8. Servo-soupape selon la revendication 7, caractérisée en ce que le tube de guidage présente, sur son côté orienté vers le piston différentiel (22), un élargissement (20.1) entourant partiellement la chambre de régulation (26).

9. Servo-soupape selon l'une des revendications 1 à 8, caractérisée en ce que dans la face de la pièce sommitale (22) orientée vers l'induit magnétique (28) est disposée une bague court-circuitée (37).
